# EUROPEAN PATENT SPECIFICATION

(11) **EP 1 257 348 B1**
(45) Date of publication and mention of the grant of the patent: **06.10.2004**
(21) Application number: 00912309.2
(22) Date of filing: 29.03.2000
(51) Int. Cl.: B01D 67/00, B01D 71/34, C08J 5/22

(54) **GRAFT POLYMERIC MEMBRANES AND ION-EXCHANGE MEMBRANES FORMED THEREFROM**
MEMBRANEN AUS PFROPFPOLYMEREN UND IONENAUSTAUSCH-MEMBRANEN DARAUS
MEMBRANES POLYMERES GREFFEES ET MEMBRANES ECHANGEUSES D'IONS FORMEES A PARTIR DE CES DERNIERES

(30) Priority: 14.02.2000 US 503760
(43) Date of publication of application: 20.11.2002
(73) Proprietor: BALLARD POWER SYSTEMS INC., Burnaby, British Columbia V5J 5J9 (CA)
(72) Inventor: STONE, Charles, West Vancouver, British Columbia V7W 3H7 (CA); STECK, Alfred, E., West Vancouver, British Columbia V7V 3H7 (CA); CHOUDHURY, Biswajit, Kingston, Ontario K7M 7K9 (CA)
(74) Representative: Beyer, Andreas, Dr.
(86) International application number: PCT/CA2000/000337
(87) International publication number: WO 2001/058576

(56) References cited:
- US-A- 4 113 922
- US-A- 4 169 023

## Description

### Field Of The Invention

The present invention relates to graft polymeric membranes in which one or more trifluorovinyl aromatic monomers are radiation graft polymerized to a polymeric base film, and methods for making same wherein the grafted polymeric chains are modified to incorporate ion-exchange groups. The resultant membranes are useful in dialysis applications, and particularly in electrochemical applications, for example as membrane electrolytes in electrochemical fuel cells and electrolyzers.

### Background Of The Invention

The preparation of graft polymeric membranes by radiation grafting of a monomer to a polymeric base film has been demonstrated for various combinations of monomers and base films. The grafting of styrene to a polymeric base film, and subsequent sulfonation of the grafted polystyrene chains has been used to prepare ion-exchange membranes.

U.S. Patent No. 4,012,303 reports the radiation grafting of α,β,β-trifluorostyrene (TFS) to polymeric base films using gamma ray co-irradiation, followed by the introduction of various ion-exchange substituents to the pendant aromatic rings of the grafted chains. With co-irradiation, since the TFS monomer is simultaneously irradiated, undesirable processes such as monomer dimerization and/or independent homopolymerization of the monomer may occur in competition with the desired graft polymerization reaction.

U.S. Patent No. 4,012,303 also reports that the TFS monomer may be first sulfonated and then grafted to the base film. Thus, the introduction of ion-exchange groups into the membrane can be done as part of the grafting process, or in a second step.

More recently, the grafting of TFS to pre-irradiated polymeric base films, followed by the introduction of various substituents to the pendant aromatic rings of the grafted chain has been reported in U.S. Patent No. 4,605,685. Solid or porous polymeric base films, such as for example polyethylene and polytetrafluoroethylene, are pre-irradiated and then contacted with TFS neat or in solution. Pre-irradiation is reportedly a more economic and efficient grafting technique, reportedly giving a percentage graft of 10-50% in reaction times of 1-50 hours. Aromatic sulfonation, haloalkylation, amination, hydroxylation, carboxylation, phosphonation and phosphorylation are among the reactions subsequently used to introduce ion-exchange groups into the grafted polymeric chains. Levels of post-sulfonation from 40% to 100% are reported.

In either case the prior art TFS-based grafted membranes incorporate statistically a maximum of one functional group per monomer unit in the grafted chain. Further, they typically incorporate only one type of functional group as substituents on the pendant aromatic rings in the grafted chains.

In the present invention, one or more types of substituted TFS monomers and/or substituted α,β,β-trifluorovinylnaphthylene (TFN) monomers are grafted to polymeric base films, the substituents being selected to offer particular advantages, for example:
(a) Substituted TFS and/or TFN monomers that are activated have increased reactivity in the grafting reaction facilitating graft polymerization. By "activated" it is meant that either the percentage graft yield of the graft polymerization reaction is increased, or that the rate of the reaction is increased, in reactions employing the substituted monomers relative to reactions employing unsubstituted monomers.
(b) Substituted TFS and/or TFN monomers in which the substituents are activating with respect to the grafting reaction, but which can be converted so as to be de-activating with respect to subsequent reactions to introduce, for example, ion-exchange functionality into the grafted chains, and thereby permit the introduction of ion-exchange groups that are more stable under certain conditions.
(c) Substituted TFS and/or TFN monomers in which the substituents are activating with respect to the grafting reaction, but which can be converted so as to be de-activating after introduction of ion-exchange functionality into the grafted chains.
(d) Grafted chains comprising monomer units with more than one aromatic ring permit the introduction of more than one ion-exchange group per grafted monomer unit, enabling the achievement of higher ion-exchange capacities at lower percentage grafts than in prior art grafted polymeric membranes.
(e) Substituted TFS and/or TFN monomers in which the substituents are precursors to ion-exchange groups may be transformed to ion-exchange groups after the grafting reaction, and can facilitate the introduction of more than one type of ion-exchange group into the grafted chains, for example, so that both cation and anion-exchange groups may be incorporated in a membrane.
(f) Substituted TFS and/or TFN monomers in which the substituents contain functionality that can be further reacted to allow for the preparation of crosslinked graft polymeric membranes that may display, for example, greater dimensional stability under certain conditions than similar graft polymeric membranes that are not crosslinked.

### Summary Of The Invention

A graft polymeric membrane is provided in which one or more types of trifluorovinyl aromatic monomers are graft polymerized to a polymeric base film. In some embodiments, the membrane comprises a polymeric base film to which has been graft polymerized a monomer (meaning at least one type of monomer) selected from the group consisting of monomers of the following formulae (I) and (II): 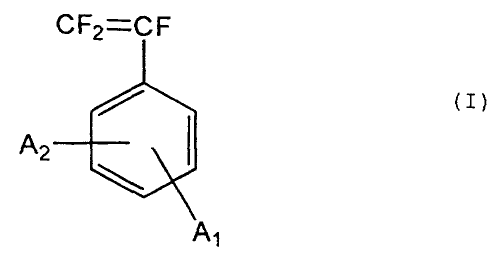 and 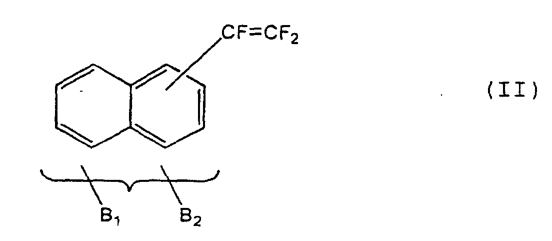 where A₁, A₂, and B₁, B₂ are independently selected from the group consisting of hydrogen, lower alkyl, lower fluoroalkyl, cyclic alkyl, aryl (where aryl is other than Ph, wherein Ph is phenyl), CH(X)Ph (where X is selected from the group consisting of fluorine, lower alkyl, lower fluoroalkyl and Ph), PRR' and P(OR)(OR') (where R and R' are independently selected from the group consisting of lower alkyl, cyclic alkyl and Ph, and where R and R' can be the same or different); and, wherein A₁, A₂, B₁, and B₂ can be the same or different, provided that in the selected monomer at least one of the substituents A₁, A₂, B₁, B₂ is other than hydrogen. In other words there is at least one of the substituent on foregoing monomers used in the graft polymerization reaction. The selected substituted monomer(s) may have one or two non-hydrogen substituents.

Of the listed alkyl substituents, lower alkyl and cyclic alkyl are generally preferred, with methyl (Me) being most preferred. Thus, membranes where one or both substituents on the selected monomer of formula (I) or (II) are Me are particularly preferred (with para-Me being the most desirable substitution positions in formula (I)). In these embodiments the base film preferably comprises poly(ethylene-co-tetrafluoroethylene)

In embodiments in which a polymeric base film has been graft polymerized with a monomer of formula (I) in which A₁ is aryl (where aryl is other than Ph) and A₂ is hydrogen, the aryl is preferably a fused polycyclic aromatic with two fused rings, biphenyl, or a heteroaromatic group with at least one heteroatom which is preferably nitrogen, oxygen or sulfur. If the heteroaromatic group contains more than one heteroatom, the heteroatoms may be the same or different. If one of the heteroatoms is nitrogen it may be advantageously N-alkylated or N-benzylated for certain membrane applications. Monocyclic heteroaromatics are generally preferred over polycyclic heteroaromatics.

The above graft polymeric membrane may comprise a single monomer, whereby the grafted chains are homopolymeric, or may comprise more than one monomer such that the grafted chains are copolymeric. For example, the graft polymeric membrane may comprise more than one monomer of formula (I) having different A₁ and/or A₂ substituents, more than one monomer of formula (II) having different B₁ and/or B₂ substituents, more than one monomer of either formula (I) or formula (II) having the same substituents located at different positions, or monomers of both formula (I) and (II), such that the grafted chains are copolymeric.

In other embodiments of the present graft polymeric membrane, the membrane comprises a polymeric base film to which has been graft polymerized, with the foregoing monomers, a monomer of the following formula (III) : 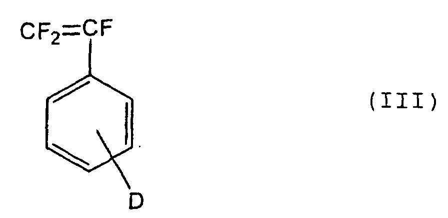 where D is selected from the group consisting of hydrogen, fluorine, CF₃, CF₂H, CF=CF₂, SO₂F and SO₃-M+ where M+ is a suitable counterion, such as, for example, metal cations and quaternary ammonium ions.

Embodiments of the present graft polymeric membrane may comprise a polymeric base film with grafted chains comprising monomer units selected from the group consisting of monomer units of the following formulae (IV) and (V), wherein at least a portion of the monomer units further optionally comprise at least one ion-exchange substituent, in which case the membrane is an ion-exchange membrane: 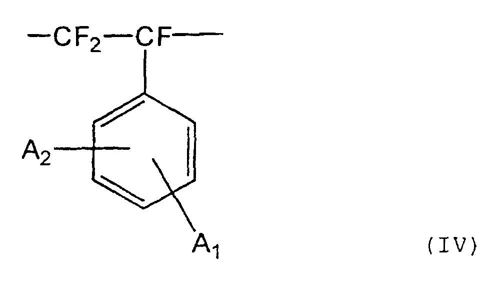 and 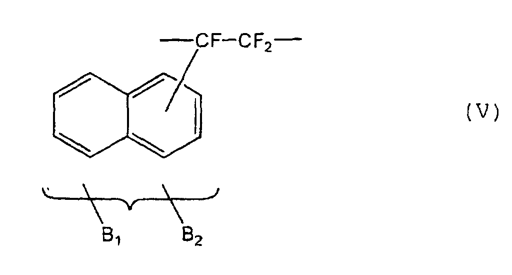 where, as before, A₁, A₂, and B₁, B₂ are independently selected from the group consisting of hydrogen, lower alkyl, lower fluoroalkyl, cyclic alkyl, aryl (where aryl is other than Ph, wherein Ph is phenyl), CH(X)Ph (where X is selected from the group consisting of fluorine, lower alkyl, lower fluoroalkyl and Ph), PRR' and P(OR) (OR') (where R and R' are independently selected from the group consisting of lower alkyl, cyclic alkyl and Ph, and where R and R' can be the same or different); and wherein A₁, A₂, B₁, and B₂ can be the same or different, provided that at least one of the substituents A₁, A₂ is other than hydrogen. The foregoing membranes may be formed by grafting monomers to a polymeric base film, or by grafting to some other form of polymeric substrate and then forming the grafted material into a membrane. In some embodiments of the ion-exchange membranes, statistically at least 50% of the monomer units in the grafted chains have at least one ion-exchange substituent per monomer unit. In other embodiments at least a portion of the monomer units comprise more than one ion-exchange substituent, and/or portion of the grafted chains may comprise at least two different types of ion-exchange groups, which may even include both anion and cation exchange groups. The ion-exchange substituent most typically incorporated is a sulfonate or sulfonic acid group.

In preferred embodiments one or both substituents of the monomer units of formulae (IV) or (V) are CH(X)Ph (where X is selected from the smaller group consisting of fluorine, Me and Ph), or Me, with para-Me being the most desirable substitution position for the Me group in units of formula (IV). In these embodiments, again, the base film preferably comprises poly(ethylene-co-tetrafluoroethylene).

The grafted chains of ion-exchange membrane may further comprise additional monomer units, such as for example, units of formula (VI): 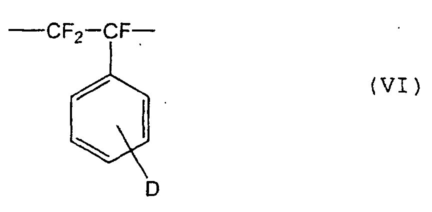 where D is selected from the group consisting of hydrogen, fluorine, CF₃, CF₂H, CF=CF₂, SO₂F and SO₃-M+ where M+ is a suitable counterion.

The ion-exchange membrane may be substantially gas impermeable. Such gas impermeable ion-exchange membranes may be incorporated into an electrode apparatus such as, for example, a membrane electrode assembly. Electrochemical fuel cells that comprise such ion-exchange membranes are also provided. For fuel cell applications, the polymeric base film of the ion-exchange membrane is preferably less than 100 µm thick.

In the present graft polymeric membranes or ion-exchange membranes, at least a portion of the grafted chains may be crosslinked.

Other membranes may be prepared from those membranes described above by subjecting them to a reaction process selected from the group consisting of, halomethylation, sulfonation, phosphonation, amination, carboxylation, hydroxylation and nitration. These are non-limiting but preferred examples of reaction processes; other reaction processes may also be used. Membranes so prepared may be useful ion-exchange membranes or precursors to ion-exchange membranes. Methods of preparing the present membranes and ion-exchange membranes are also contemplated and described herein.

Ion-exchange membranes may be prepared by a method which comprises graft polymerizing to a polymeric base film a monomer selected from the group consisting of monomers of formulae (I) and (II) described above, wherein in the selected monomer(s) at least one of the substituents A₁, A₂, and B₁, B₂ is a non-hydrogen substituent which activates the monomer with respect to graft polymerization (relative to the corresponding unsubstituted monomer). The method further comprises introducing a sulfonate group (or other ion-exchange group) into at least a portion of the graft polymerized monomer units and converting at least a portion of the non-hydrogen substituents to substituents which are deactivating with respect to desulfonation (relative to the unsubstituted monomer unit). The conversion of the non-hydrogen substituent to a deactivating group may be performed before or after introduction of the sulfonate group into the grafted units.

Some of the membranes described above may be prepared by a method comprising graft polymerizing to a polymeric base film a substituted monomer selected from the group consisting of monomers of formulae (I) and (II) described above, wherein A₁, A₂, and B₁, B₂ are as described above.

In preferred embodiments of this method, A₁ and B₁ are independently selected from the group consisting of:
aryl (where aryl is selected from the group consisting of monocyclic heteroaromatics, fused polycyclic heteroaromatics, and heteroaromatic ring assemblies having at least one nitrogen atom);and
phosphines of the formula PRR' and phosphites of formula P(OR)(OR') (where R and R' are independently selected from the group consisting of lower alkyl, cyclic alkyl and Ph, and where R and R' can be the same or different);
and A₂ and B₂ are hydrogen.

The method further comprises alkylating or benzylating at least a portion of any of the nitrogen atoms of the aryl group, or the phosphorus atoms of the phosphine or phosphite.

In other embodiments where A₁ and B₁ are independently selected from the group consisting of phosphines of the formula PRR' and phosphites of formula P(OR) (OR') (where R and R' are independently selected from the group consisting of lower alkyl, cyclic alkyl and Ph, and where R and R' can be the same or different), and A₂ and B₂ are hydrogen, the method may further comprise the sequential steps of introducing a nitro group into at least a portion of the monomer units of the membrane and converting at least a portion of those nitro groups to quaternary ammonium groups. This method optionally further comprises subsequently converting the phosphine or phosphite to an ion-exchange substituent.

In still another embodiment, the present method comprises graft polymerizing to a polymeric base film a monomer selected from the group consisting of monomers of the formulae (I) and (II) described above, but where A₁ and B₁ are independently selected from the group consisting of PRR', P(OR)(OR'), and SR (where R and R' are independently selected from the group consisting of lower alkyl, cyclic alkyl and Ph, and where R and R' can be the same or different), and A₂ and B₂ are the same as A₁ and B₁ respectively or hydrogen. The method comprises the steps of graft polymerizing the monomers to a polymeric base film, and oxidizing at least a portion of the PRR', P(OR)(OR'), or SR groups to produce phosphine oxides, phosphones, phosphonates, sulfoxides, or sulfones. The method may further comprise introducing ion-exchange substituents into at least a portion of said monomer units, before or after the oxidation step. Where A₁ and B₁ are independently selected from the group SR (where R is selected from the group consisting of lower alkyl, cyclic alkyl and Ph), and A₂ and B₂ are the same as A₁ and B₁ respectively or hydrogen, the method optionally further comprises converting at least a portion of the SR groups to sulfonate or sulfonic acid groups.

In the above-described embodiments the substrate for the graft polymerization is preferably a polymeric base film. However, the polymeric substrate may be in other forms such as, for example, a powder or in solution, or the substrate may be an oligomer in any form. Where the substrate is not in the form of a film an additional step will be required to form the grafted material into a membrane. Where the substrate is in solution an additional solvent removal step will be required.

### Brief Description Of The Drawings

FIG. 1 is a plot of cell voltage as a function of current density (expressed in mA/cm²) in an electrochemical fuel cell employing a sulfonated membrane of p-Me-TFS grafted poly(ethylene-co-tetrafluoroethylene) and operating on hydrogen-oxygen (plot A) and hydrogen-air (plot B).
FIG. 2 is a plot of cell voltage as a function of current density (expressed in mA/cm²) in an electrochemical direct methanol fuel cell employing a sulfonated membrane of p-Me-TFS grafted poly(ethylene-co-tetrafluoroethylene) operating on aqueous methanol-air.

### Detailed Description Of Preferred Embodiments

As used in this description and in the appended claims, in relation to substituents of TFS and/or TFN monomers, lower alkyl means straight chain or branched C₁ - C₆ alkyl groups. Lower fluoroalkyl means partially or completely fluorinated straight or branched C₁ - C₆ saturated chains, provided that the benzylic carbon has no more than one fluorine atom attached thereto. In preferred embodiments, the lower alkyl and lower fluoroalkyl are C₁ - C₄. Other haloalkyls of the same general description may also be used in the present invention, however, fluorine is preferred due to the relative lability of chlorine, bromine and iodine to substitution, which may result in competition in other reaction processes or in undesirable side reactions. Cyclic alkyl means cyclic alkyls having C₃ - C₇ rings. Aryl means: monocyclic aromatic rings; fused polycyclic hydrocarbons containing at least one aromatic ring (e.g., indan); fused polycyclic aromatic hydrocarbons (e.g., indene and naphthalene); aromatic ring assemblies (e.g., biphenyl); and, heteroaromatics thereof, wherein the heteroatoms are nitrogen, oxygen, or sulfur, and the heterocyclic may contain more than one heteroatom, and may also contain different species of heteroatom (e.g., indoline, pyrrole, pyridine, oxathiazine, and purine). The abbreviation Me is used to represent a methyl group, and the abbreviation Ph is used to represent a phenyl group. The formula SO₃-M+ represents sulfonate salts, where M+ may be any suitable counterion, such as, for example, metal cations and quaternary ammonium ions.

Suitable substituents for TFS and/or TFN monomers that are activating in graft polymerization reactions include, for example: lower alkyls; lower fluoroalkyls; cyclic alkyls; aryl groups; and, phosphines and phosphites. Substituents may be coupled to the aromatic rings of TFS and/or TFN monomers in any position. Meta- and para-substituted monomers are preferred, with para-substituted monomers being more preferred.

Any radiation capable of introducing surficient concentrations of free radical sites on and within the base polymeric film may be used in the preparation of the grafted polymeric membranes described herein. For example, the irradiation may be by gamma rays, X-rays, electron beam, or high-energy UV radiation. Electron beam irradiation is generally preferable as the process times are short and thus more suited to high volume production processes. The decay of the source and typically longer reactions times required with gamma-ray radiation tend to render it less suitable for high volume manufacturing processes.

The polymeric base film may be pre-irradiated prior to bringing it into contact with the monomer or monomer mixture to be grafted or the substrate and monomer(s) may be irradiated together (co-irradiation).

For the preparation of membranes, grafting to a polymeric base film is generally more efficient and cost-effective than grafting to a substrate in some other form such as a powder and then forming a membrane from the grafted material.

The preferred polymeric base film material is dependent on the application in which the grafted membrane is to be used. The base film may be a porous or dense film. Preferred substrate materials for electrochemical applications, for example, include hydrocarbons such as polyolefins, especially polyethylene and polypropylene. In some applications, a perfluorinated or partially fluorinated polymeric base film.may be used, for example, polytetrafluoroethylene (PTFE), poly(tetrafluoroethylene-co-hexafluoropropylene), polyvinylidene fluoride, and preferably poly(ethylene-co-tetrafluoroethylene).

In the grafting reaction, the polymeric base film is treated with the monomer(s) in the liquid phase, either as a neat liquid or in a solution. Alternatively, the polymeric base film may be treated with a mixture of liquid and vapor phase monomer(s) (including aerosols), or with monomer(s) in the vapor phase only. It can be advantageous to select a solvent that will cause the solution to penetrate the base film and cause it to swell. This facilitates grafting of the monomer(s) throughout the membrane thickness. Preferably the irradiation and grafting process is carried out in an inert atmosphere.

The reaction conditions may be selected so as to introduce crosslinking between monomer units during graft polymerization or subsequent thereto. Crosslinking may be introduced into polymeric membranes where it is, for example, desirable to increase dimensional stability, reduce swelling, modify chemical and/or mechanical properties, or enhance the ion-exchange efficiency. Methods of preparing crosslinked graft polymeric membranes are known in the art. For example, U.S. Pat. No. 5,656,386 describes adding a crosslinking agent to vinyl monomers to be grafted to a membrane film, wherein the radiation grafting and crosslinking reactions occur simultaneously.

In the present graft polymeric membranes, the constituent monomers may be selected so as to be capable of forming crosslinks without requiring the addition of a separate crosslinking agent. If crosslinking is desirable, the monomer(s) preferably contains functionality that can be crosslinked. For example, monomers having a t-butyl group as a substituent would be less appropriate, since such substituents do not participate readily in crosslinking reactions. As another example, monomers having -CHF₂ or -CH(CF₃)₂ substituents are capable of forming very stable crosslinks, but such monomers may be so de-activating towards polymerization that the percentage graft or rate of grafting may fall to an undesirable level. However, such monomers may be suitably used in the grafting reaction provided they are included in the monomer mixture at a relatively low mole percentage (e.g., less than about 10 mol %).

For the preparation of grafted ion-exchange membranes from substituted TFS and/or TFN monomers, substituents that are activating with respect to the polymerization reaction are typically also activating towards subsequent reactions to introduce ion-exchange groups, such as, for example, halomethylation, sulfonation, phosphonation, amination, carboxylation, hydroxylation (optionally combined with subsequent phosphorylation) and nitration. Although the presence of an activating substituent may be beneficial in that it may facilitate the introduction of the ion-exchange group into the monomer, where the ion-exchange group is sulfonate, for example, there may also be a disadvantage. This is because sulfonation is a macroscopically reversible process, so a substituent that is activating with respect to the introduction of a sulfonate group may also make the sulfonate group less stable under certain conditions, thereby facilitating desulfonation of the monomer unit.

In some embodiments of the present membranes or method, the substituted TFS and/or TFN monomers to be grafted contain a phosphine, phosphite, or thioether substituent. These substituents are activating with respect to the graft polymerization reaction. Ion-exchange groups such as, for example, sulfonate, may then be introduced into the aromatic ring of the substituted TFS and/or TFN monomer units after graft polymerization. Then, following graft polymerization the phosphine, phosphite or thioether groups can be oxidized to produce phosphine oxides, phosphones, phosphonates, sulfoxides, or sulfones. Methods suitable for such oxidations are well known to those skilled in the art. The resulting phosphine oxides, phosphones, phosphonates, sulfoxides and/or sulfones are de-activating, thus making the introduced ion-exchange groups, in particular sulfonate groups, more stable under certain conditions.

In addition, these substituents may allow for the introduction of additional ion-exchange functionality into the TFS and/or TFN monomer units. For example, oxidation of the phosphite substituent yields a phosphonate group, which on hydrolysis will yield a cation-exchange group. Introduction of either cation or anion-exchange groups into the substituted TFS and/or TFN monomer units, followed by oxidation of phosphite and subsequent hydrolysis of the phosphonate substituent, may yield TFS and/or TFN monomer units with more than one ion-exchange group per monomer unit, on average. As another example, the phosphine or phosphite substituent may be alkylated or benzylated to form an anion-exchange group. Further, employing the additional steps of nitration followed by conversion of the nitro group to an amino group, and subsequently to a quaternary ammonium salt may yield monomer units having two different anion-exchange groups. As yet another example, the thioether substituent may be converted to a sulfonate group by, for example, the method described in U.S. Pat. No. 5,830,962. Again, introduction of either cation or anion-exchange groups into the substituted TFS and/or TFN monomer units, followed by alkylation or benzylation of the phosphine, or conversion of thioether to sulfonate, may yield TFS and/or TFN monomer units with more than one ion-exchange group per monomer, on average, depending upon the compatibility of the chemistry involved. Thus, the present method allows for the preparation of amphoteric graft ion-exchange membranes, or graft ion-exchange membranes having two different ion-exchange groups, simply by choosing the appropriate ion-exchange group to be introduced into the substituted TFS and/or TFN monomer units.

In another embodiment of the present membranes and method, the substituted TFS and/or TFN monomers to be grafted contain a heteroaromatic substituent containing at least one nitrogen heteroatom. These substituents are also activating with respect to the graft polymerization reaction. Following graft polymerization, the heteroaromatic substituents can be N-alkylated or N-benzylated, forming anion-exchange sites in the grafted chains. Optionally, cation-exchange groups may also be introduced, either before or preferably after N-alkylation or N-benzylation, resulting in amphoteric ion-exchange membranes.

In any of the foregoing embodiments of the present membranes and method, sulfonate ion-exchange groups can be introduced to the monomer units in the grafted chains. For example, the membrane, preferably swollen with an appropriate solvent to facilitate sulfonation throughout its thickness, can be reacted with a solution of sulfur trioxide, or with sulfur trioxide vapor alone (or indeed an aerosol mist of sulfur trioxide). Other sulfonation reagents can be used, as will be familiar to those skilled in the art, such as oleum and chlorosulfonic acid, for example.

While the foregoing methods have been described in relation to substituted TFS and/or TFN monomers, it will be readily apparent to those skilled in the art that the foregoing methods are readily adaptable to other monomers. It is anticipated that other vinyl monomers containing an aromatic ring may be suitably adaptable to the disclosed methods. For example, in the preparation of graft membranes employing styrenic monomers, it would still be advantageous to employ substituents that are activating with respect to the graft polymerization reaction, but which can be converted to de-activating substituents in subsequent reactions where it is desirable to introduce, for example, ion-exchange groups that may, by this process, be more stable under certain conditions. In addition to styrenic monomers, it is expected that the foregoing methods will be adaptable to substituted and unsubstituted monomers of the following basic structures: 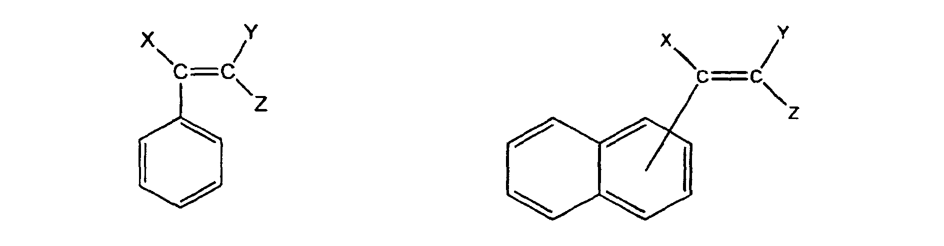 where X can be H, F or Me and
if X = F, then Y = Z = H, or one of Y, Z is H and the other is F,
if X = H, then Y = Z = H, or one of Y, Z is H and the other is F, and
if X = Me, then Y = Z = H.

The following examples are for purposes of illustration and are not intended to limit the invention.

### EXAMPLE 1

### Grafting of para-methyl-α,β,β-trifluorostyrene (p-Me-TFS) to poly(ethylene-co-tetrafluoroethylene) (Tefzel®) Film

A 2 mil (approx. 50 µm) thick, 7 inch × 7 inch (18 cm × 18 cm) piece of poly(ethylene-co-tetrafluoroethylene) (Tefzel®) film was irradiated with a dose of 20 Mrad using a high energy electron beam (60 kW) radiation source, in an inert atmosphere. The irradiated base film was kept at -30 °C in an inert atmosphere prior to use. The irradiated membrane was then exposed to neat, degassed p-Me-TFS in an inert atmosphere at 80 °C for 24 hours. The p-Me-TFS grafted film was removed, washed with toluene and dried at 60 °C. The percentage graft was 79%. In these Examples, the percentage graft is the increase in weight of the film after the grafting reaction compared to the weight of the film before the grafting reaction.

### EXAMPLE 2

### Grafting of para-methyl-(α,β,β-trifluorostyrene (p-Me- TFS) to poly (ethylene-co-tetrafluoroethylene) (Tefzel®) Film

A 2 mil (approx. 50 µm) thick, 15 inch × 15 inch (38 cm × 38 cm) piece of poly (ethylene-co-tetrafluoroethylene) (Tefzel®) film was irradiated with a dose of 20 Mrad using a high energy electron beam (60 kW) radiation source, in an inert atmosphere. The irradiated base film was stored at -30 °C in an inert atmosphere prior to use. The irradiated membrane was then exposed to neat, degassed p-Me-TFS in an inert atmosphere at 70 °C for 3 hours. The p-Me-TFS grafted film was removed, washed with toluene and dried at 60 °C. The percentage graft was 67%.

### EXAMPLE 3

### Grafting of para-methyl-α,β,β-trifluorostyrene (p-Me-TFS) to poly(ethylene-co-tetrafluoroethylene) (Tefzel®) Film and Sulfonation of the Grafted Membrane

a) A 2 mil (approx. 50 µm) thick, 7 inch x 7 inch (18 cm x 18 cm) piece of poly(ethylene-co-tetrafluoroethylene) (Tefzel®) film was irradiated with a dose of 10 Mrad using a high energy electron beam (60 kW) radiation source, in an inert atmosphere. The irradiated base film was kept at -30°C in an inert atmosphere prior to use. It was then exposed to neat, degassed, p-Me-TFS in an inert atmosphere at 50 °C for 60 hours. The p-Me-TFS grafted film was removed, washed with toluene and dried at 60 °C. The percentage graft was 49%.
b) A sulfonating solution was prepared by careful addition of 30 g of liquid sulfur trioxide to 70 g of 1,1,2,2-tetrachloroethane. The grafted membrane was sulfonated by immersion in the above-mentioned sulfonating solution for 2 hours at 70 °C. The resultant ion-exchange membrane was washed with water and dried at 60 °C. The equivalent weight of the sulfonated membrane was 660 g/mol, with a water content of 26% at room temperature.

### EXAMPLE 4

### Grafting of para-methyl-(α,β,β-trifluorostyrene (p-Me-TFS) to poly(ethylene-co-tetrafluoroethylene) (Tefzel®) Film and Sulfonation of the Grafted Membrane

a) A 2 mil (approx. 50 µm) thick, 7 inch x 7 inch (18 cm x 18 cm) piece of poly(ethylene-co-tetrafluoroethylene) (Tefzel®) film was grafted with para-methyl-α,β,β-trifluorostyrene similarly as in Example 3, using a 5 Mrad irradiation dose. The percentage graft was 35%.
b) The grafted film was sulfonated according to the procedure described in step (b) of Example 3. The equivalent weight of the sulfonated membrane was 821 g/mol, with a water content of 18% at room temperature.

### EXAMPLE 5

### Use of Sulfonated p-Me-TFS grafted poly(ethylene-co-tetrafluoroethylene) Membrane as an Ion-exchange Membrane in a Fuel Cell

The membrane prepared as described in Example 3 was bonded to two catalyzed carbon fiber paper electrodes to form a membrane electrode assembly having a total platinum catalyst loading of 1 mg/cm². The membrane electrode assembly was tested in a Ballard Mark IV single cell fuel cell. The following operating conditions were used:
Temperature: 80°C
Reactant inlet pressure:
   3.02 bara for oxidant and fuel
Reactant stoichiometries:
   2.0 oxidant and 1.5 hydrogen.

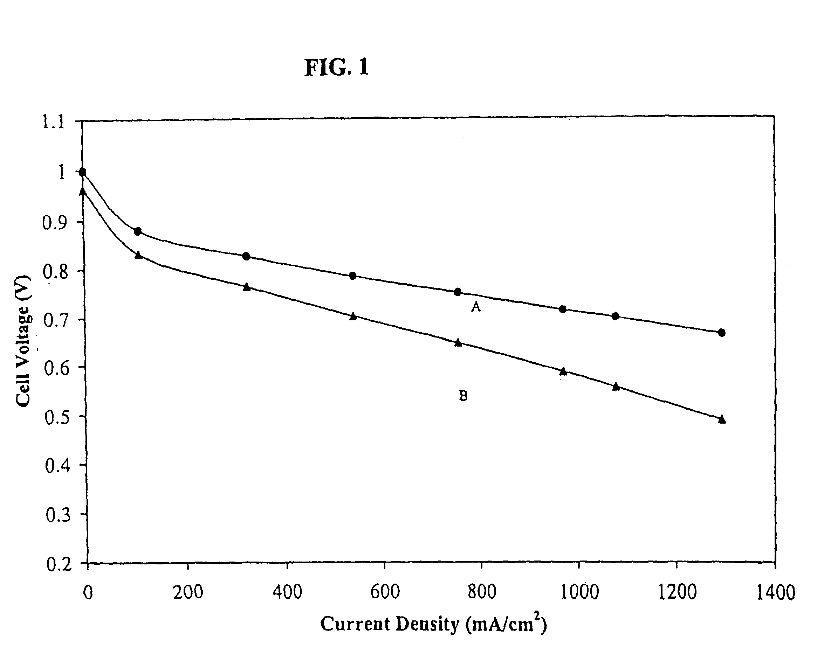

FIG. 1 shows polarization plots of voltage as a function of current density for the sulfonated grafted membrane employed in a membrane electrode assembly in the electrochemical fuel cell operating on hydrogen-oxygen (plot A) and hydrogen-air (plot B).

### EXAMPLE 6

### Use of Sulfonated p-Me-TFS grafted poly(ethylene-co-tetrafluoroethylene) Membrane as an Ion-exchange Membrane in a Fuel Cell

The membrane prepared as described in Example 4 was bonded to two catalyzed carbon fiber paper electrodes to form a membrane electrode assembly having a total platinum catalyst loading of 8 mg/cm². The membrane electrode assembly was tested in a Ballard Mark IV single cell direct methanol fuel cell. The following operating conditions were used:
Temperature: 110 °C
Fuel: 0.4 M methanol solution (in water)
Reactant inlet pressure: 3.02 bara for oxidant and fuel
Reactant stoichiometries: 2.0 oxidant and 3.0 methanol.

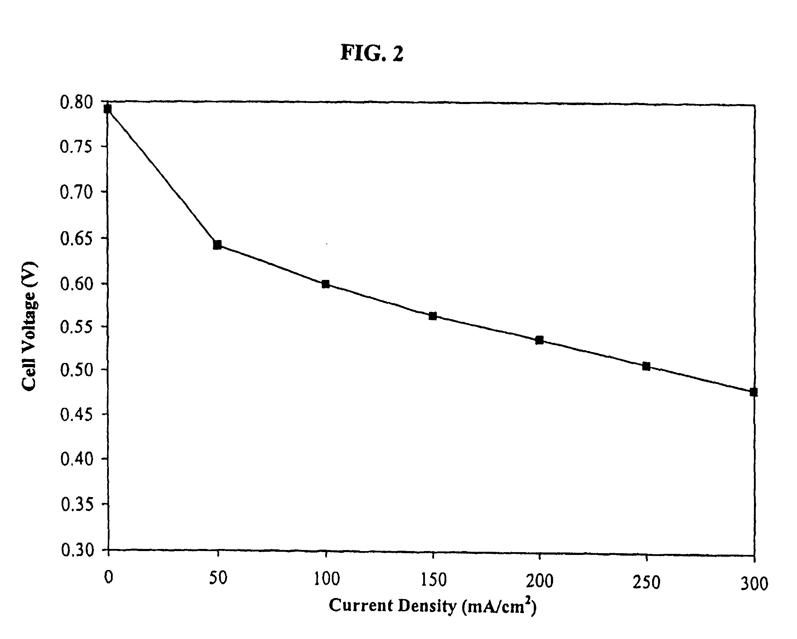

FIG. 2 shows polarization plots of voltage as a function of current density for the sulfonated grafted membrane employed in a membrane electrode assembly in the electrochemical fuel cell operating on methanol-air.

In addition to the utility of the grafted membranes described herein in ion exchange membranes for electrochemical fuel cells, it is contemplated that such membranes will also have utility in the following applications:
1. as membranes in filtration and ultrafiltration applications;
2. as proton exchange membranes in water electrolysis, which involves a reverse chemical reaction to that employed in hydrogen/oxygen electrochemical fuel cells;
3. as membranes in chloralkali electrolysis, which typically involves the electrolysis of a brine solution to produce chlorine and sodium hydroxide, with hydrogen as a by-product;
4. as electrode separators in conventional batteries, provided the membrane has the requisite chemical inertness and high electrical conductivity;
5. as ion-selective electrodes, particularly those used for the potentiometric determination of a specific ion such as Ca²+, Na+, K+ and like ions;
6. as sensor materials for humidity sensors based on ion exchange membranes, as the electrical conductivity of an ion exchange membrane varies with humidity;
7. as ion exchange membranes for separations by ion exchange chromatography - typical such applications are deionization and desalination of water, ion separations, removal of interfering ionic species, and separation and purification of biomolecules;
8. as ion exchange membranes employed in analytical pre- concentration techniques (e.g., Donnan Dialysis);
9. as ion exchange membranes in electrodialysis, in which membranes are employed to separate components of an ionic solution under the driving force of an electrical current - industrial applications include desalination of brackish water, preparation of boiler feed make-up and chemical process water, de-ashing of sugar solutions, deacidification of citrus juices, separation of amino acids, and the like;
10. as membranes in dialysis applications, in which solutes diffuse from one side of the membrane (the feed side) to the other side according to their concentration gradient - applications include haemodialysis and the removal of alcohol from beer;
11. as membranes in gas separation (gas permeation) and pervaporation (liquid permeation) techniques; and
12. as bipolar membranes employed in water splitting and subsequently in the recovery of acids and bases from waste water solutions.

## Claims

1. A membrane comprising a polymeric base film with grafted chains comprising monomer units selected from the group consisting of monomer units of formula (I): 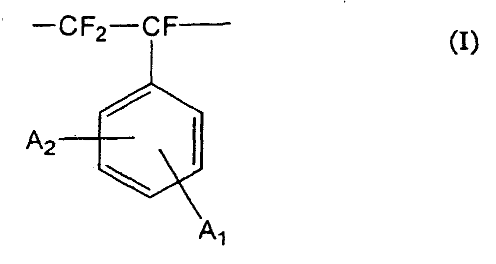 and formula (II): 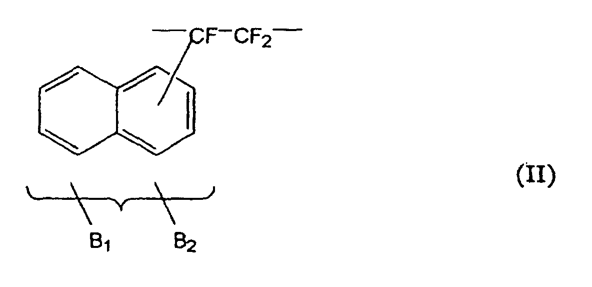 where A₁, A₂, and B₁, B₂ are independently selected from the group consisting of:
hydrogen, lower alkyl, lower fluoroalkyl, cyclic alkyl,
aryl (where aryl is other than Ph),
CH(X)Ph, where X is selected from the group consisting of fluorine, lower alkyl, lower fluoroalkyl and Ph,
PRR' and P(OR)(OR') where R and R' are independently selected from the group consisting of lower alkyl, cyclic alkyl and Ph, and where R and R' can be the same or different,
and wherein A₁, A₂, B₁, and B₂ can be the same or different, provided that in each of the monomer units at least one of the substituents A₁, A₂, B₁, B₂ is other than hydrogen.

2. The membrane of claim 1 wherein A₁ and B₁ are independently selected from the group consisting of lower alkyl, lower fluoroalkyl and cyclic alkyl.

3. The membrane of claim 1 wherein A₁ and B₁ are the same or different aryl groups.

4. The membrane of claim 1 wherein at least one of A₁ and B₁ is a heteroaromatic group containing at least one heteroatom, the at least one heteroatom selected from the group consisting of nitrogen, oxygen and sulfur.

5. The membrane of claim 4 wherein at least one of the heteroatoms is nitrogen that is N-alkylated or N-benzylated.

6. The membrane of claim 1 wherein A₁ and B₁ are independently selected from the group consisting of PRR' and P(OR)(OR'), where R and R' are independently selected from the group consisting of lower alkyl, cyclic alkyl and Ph, and where R and R' can be the same or different.

7. The membrane of claim 1 wherein A₁ and B₁ are independently selected from the group consisting of Me and CH(X)Ph, where X is selected from the group consisting of fluorine, Me, and Ph.

8. The membrane of claim 1 wherein the grafted chains comprise monomer units of formula (I), A₁ is Me and A₂ is Me or hydrogen.

9. The membrane of claim 1 wherein the grafted chains comprise monomer units of formula (I), A₁ is para-Me and A₂ is hydrogen.

10. The membrane of claims 1-9, wherein the grafted chains are homopolymeric.

11. The membrane of claims 1-9, wherein the grafted chains are copolymeric.

12. The membrane of claims 1-11, wherein at least a portion of the grafted chains are crosslinked.

13. The membrane of claims 1 - 12, wherein the grafted chains further comprise monomer units of formula (III): 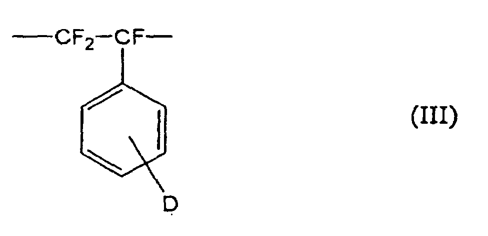 where D is selected from the group consisting of hydrogen, fluorine, CF₃, CF₂H, CF=CF₂, SO₂F and SO₃-M+, wherein M+ is a suitable counterion.

14. The membrane of claims 1 - 13, wherein at least a portion of the monomer units further comprise at least one ion-exchange substituent.

15. The membrane of claim 14, wherein the grafted chains comprise at least two different types of ion-exchange groups.

16. The membrane of claim 14 or 15, wherein the grafted chains comprise an anion-exchange group and a cation-exchange group.

17. The membrane of claims 14 - 16, wherein the membrane is substantially gas impermeable.

18. An electrode apparatus comprising the membrane of any of claims 14-17.

19. A membrane electrode assembly comprising the membrane of any of claims 14-17.

20. An electrochemical fuel cell comprising the membrane of any of claims 14-17.

21. A method of preparing a membrane, the method comprising:
graft polymerizing to a polymeric base film a monomer selected from the group consisting of monomers of formula (I): 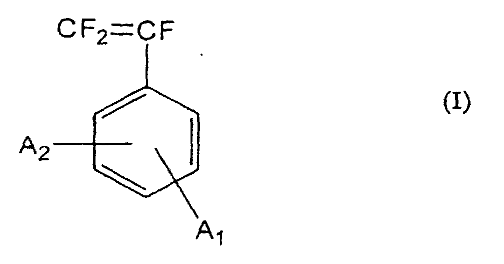
and formula (II): 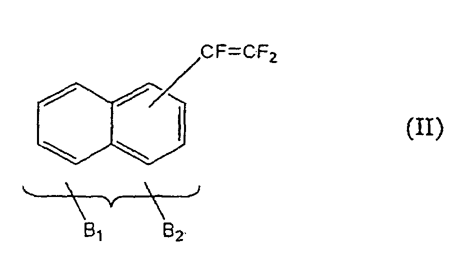 wherein at least one of A₁, A₂, and at least one of B₁, B₂, is a substituent other than hydrogen that activates the monomer with respect to the graft polymerizing;
introducing a sulfonate group into at least a portion of the graft polymerized monomer units; and
converting at least a portion of the substituents to a substituent which is deactivating with respect to desulfonation.

22. The method of claim 21, wherein A₁ and B₁ are independently selected from the group consisting of:
an aryl group selected from the group consisting of monocyclic heteroaromatics, fused polycyclic heteroaromatics, and heteroaromatic ring assemblies having at least one nitrogen atom, and
phosphines of the formula PRR' and phosphites of formula P(OR)(OR'), where R and R' are independently selected from the group consisting of lower alkyl, cyclic alkyl and Ph, and where R and R' can be the same or different, the method further comprising alkylating or benzylating at least a portion of any of the nitrogen atoms of the aryl group, or the phosphorus atoms of the phosphine or phosphite.

23. The method of claim 21, wherein A₁ and B₁ are independently selected from the group consisting of:
phosphines of the formula PRR' and phosphites of formula P(OR)(OR') where R and R' are independently selected from the group consisting of lower alkyl, cyclic alkyl and Ph, and where R and R' can be the same or different, the method further comprising the sequential steps of:
introducing a nitro group into at least a portion of the grafted monomer units of the membrane; and
converting at least a portion of the nitro groups to quaternary ammonium groups.

24. The method of claim 23, further comprising converting the phosphine or phosphite to an ion-exchange substituent.

25. The method of claim 21 wherein A₁ and B₁ are independently selected from the group consisting of:
PRR', P(OR)(OR'), and SR, where R and R' are independently selected from the group consisting of lower alkyl, cyclic alkyl and Ph, and where R and R' can be the same or different,
the method further comprising oxidizing at least a portion of the PRR', P(OR)(OR'), or SR groups.

26. The method of claim 25, wherein A₁ and B₁ are independently selected from the group SR, where R is selected from the group consisting of lower alkyl, cyclic alkyl and Ph, the method further comprising converting at least a portion of the SR groups to sulfonate or sulfonic acid groups.

## Patentansprüche

1. Membran umfassend einen Polymerbasisfilm mit aufgepfropften Ketten umfassend Monomereinheiten, die aus der Gruppe gewählt sind, die aus Monomereinheiten der Formel (I): 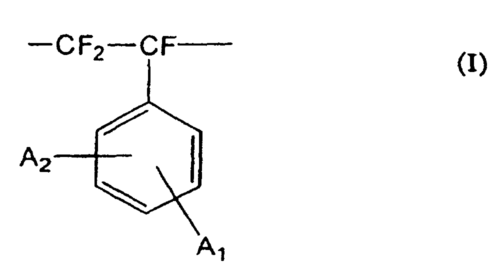 und der Formel (II) besteht: 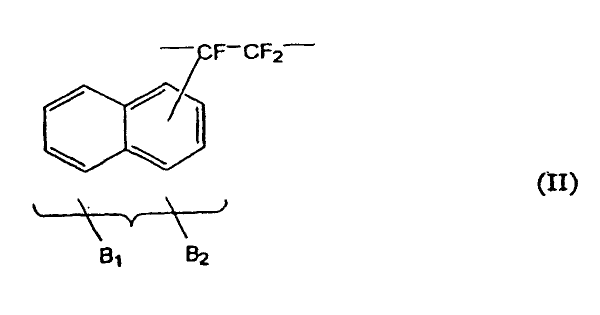 worin A₁, A₂ und B₁, B₂ unabhängig voneinander aus der Gruppe gewählt sind, bestehend aus:
Wasserstoff, Niederalkyl, Niederfluoralkyl, cyclischem Alkyl,
Aryl (worin Aryl von Ph verschieden ist),
CH(X)Ph, worin X aus der Gruppe gewählt ist, die aus Fluor, Niederalkyl, Niederfluoralkyl und Ph besteht,
PRR' und P(OR)(OR'), worin R und R' unabhängig voneinander aus der Gruppe gewählt sind, die aus Niederalkyl, cyclischem Alkyl und Ph besteht, und worin R und R' gleich oder verschieden sein können,
und worin A₁, A₂, B₁ und B₂ gleich oder verschieden sein können, mit der Maßgabe, dass in jeder der Monomereinheiten wenigstens einer der Substituenten A₁, A₂, B₁, B₂ von Wasserstoff verschieden ist.

2. Membran gemäß Anspruch 1, worin A₁ und B₁ unabhängig voneinander aus der Gruppe, die aus Niederalkyl, Niederfluoralkyl und cyclischem Alkyl besteht, gewählt sind.

3. Membran gemäß Anspruch 1, worin A₁ und B₁ gleiche oder unterschiedliche Arylgruppen sind.

4. Membran gemäß Anspruch 1, worin wenigstens einer von A₁ und B₁ eine heteroaromatische Gruppe, die wenigstens ein Heteroatom enthält, darstellt, wobei das wenigstens eine Heteroatom aus der Gruppe gewählt ist, die aus Stickstoff, Sauerstoff und Schwefel besteht.

5. Membran gemäß Anspruch 4, worin wenigstens eines der Heteroatome einen Stickstoff darstellt, der N-alkyliert oder N-benzyliert ist.

6. Membran gemäß Anspruch 1, worin A₁ und B₁ unabhängig voneinander aus der Gruppe gewählt sind, die aus PRR' und P(OR)(OR') besteht, worin R und R' unabhängig voneinander aus der Gruppe gewählt sind, die aus Niederalkyl, cyclischem Alkyl und Ph besteht, und worin R und R' gleich oder verschieden sein können.

7. Membran gemäß Anspruch 1, worin A₁ und B₁ unabhängig voneinander aus der Gruppe gewählt sind, die aus Me und CH(X)Ph besteht, worin X aus der Gruppe, die aus Fluor, Me und Ph besteht, gewählt ist.

8. Membran gemäß Anspruch 1, worin die gepfropften Ketten Monomereinheiten der Formel (I) umfassen, A₁ für Me steht und A₂ für Me oder Wasserstoff steht.

9. Membran gemäß Anspruch 1, worin die gepfropften Ketten Monomereinheiten der Formel (I) umfassen, A₁ für para-Me steht und A₂ für Wasserstoff steht.

10. Membran gemäß den Ansprüchen 1 bis 9, worin die gepfropften Ketten homopolymer sind.

11. Membran gemäß den Ansprüchen 1 bis 9, worin die gepfropften Ketten copolymer sind.

12. Membran gemäß den Ansprüchen 1 bis 11, worin wenigstens ein Teil der gepfropften Ketten quervernetzt ist.

13. Membran gemäß den Ansprüchen 1 bis 12, worin die gepfropften Ketten zusätzlich Monomereinheiten der Formel (III) umfassen: 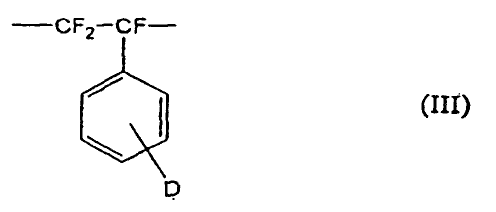 worin D aus der Gruppe gewählt ist, die aus Wasserstoff, Fluor, CF₃, CF₂H, CF=CF₂, SO₂F und SO₃-M+ besteht, worin M+ ein geeignetes Gegenion darstellt.

14. Membran gemäß den Ansprüchen 1 bis 13, worin wenigstens ein Teil der Monomereinheiten zusätzlich wenigstens einen Ionenaustauschsubstituenten umfasst.

15. Membran gemäß Anspruch 14, worin die gepfropften Ketten wenigstens zwei unterschiedliche Arten von Ionenaustauschgruppen umfassen.

16. Membran gemäß Anspruch 14 oder 15, worin die gepfropften Ketten eine Anionenaustauschgruppe und eine Kationenaustauschgruppe umfassen.

17. Membran gemäß den Ansprüchen 14 bis 16, worin die Membran im Wesentlichen gasundurchlässig ist.

18. Elektrodenvorrichtung umfassend die Membran gemäß einem der Ansprüche 14 bis 17.

19. Membranelektrodenaufbau umfassend die Membran gemäß einem der Ansprüche 14 bis 17.

20. Elektrochemische Brennstoffzelle umfassend die Membran gemäß einem der Ansprüche 14 bis 17.

21. Verfahren zum Herstellen einer Membran, wobei das Verfahren umfasst:
Pfropfpolymerisieren eines Monomers auf einen Polymerbasisfilm, wobei das Monomer aus der Gruppe gewählt ist, die aus Monomeren der Formel (I): 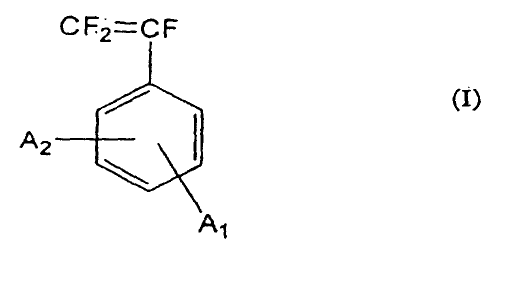 und der Formel (II): 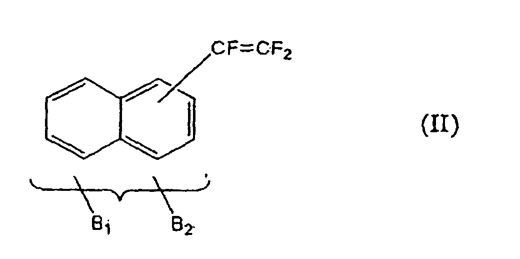 besteht, worin wenigstens einer von A₁, A₂, und wenigstens einer von B₁, B₂ ein Substituent ist, der von Wasserstoff verschieden ist, der das Monomer in Bezug auf die Pfropfpolymerisation aktiviert;
Einführen einer Sulfonatgruppe in wenigstens einen Teil der pfropfpolymerisierten Monomereinheiten; und
Umwandeln von wenigstens einem Teil der Substituenten in einen Substituenten, der in Bezug auf eine Desulfonierung deaktivierend ist.

22. Verfahren gemäß Anspruch 21, worin A₁ und B₁ unabhängig voneinander aus der Gruppe gewählt sind, bestehend aus:
einer Arylgruppe, die aus der Gruppe gewählt ist, die aus monocyclischen Heteroaromaten, kondensierten polycyclischen Heteroaromaten und heteroaromatischen Ringsystemen mit wenigstens einem Stickstoffatom besteht, und
Phosphinen der Formel PRR' und Phospiten der Formel P(OR)(OR'), worin R und R' unabhängig voneinander aus der Gruppe gewählt sind, die aus Niederalkyl, cyclischem Alkyl und Ph besteht, und worin R und R' gleich oder verschieden sein können,
wobei das Verfahren zusätzlich das Alkylieren oder Benzylieren von wenigstens einem Teil der Stickstoffatome der Arylgruppe oder der Phosphoratome des Phosphins oder Phosphits umfasst.

23. Verfahren gemäß Anspruch 21, worin A₁ und B₁ unabhängig voneinander aus der Gruppe gewählt sind, bestehend aus:
Phosphinen der Formel PRR' und Phosphiten der Formel P(OR)(OR'), worin R und R' unabhängig voneinander aus der Gruppe gewählt sind, die aus Niederalkyl, cyclischem Alkyl und Ph besteht, und worin R und R' gleich oder verschieden sein können,
wobei das Verfahren zusätzlich die folgenden aufeinanderfolgenden Schritte umfasst:
Einführen einer Nitrogruppe in wenigstens einen Teil der gepfropften Monomereinheiten der Membran, und
Umwandeln von wenigstens einem Teil der Nitrogruppen in quaternäre Ammoniumgruppen.

24. Verfahren gemäß Anspruch 23, das zusätzlich die Umwandlung des Phosphins oder Phosphits in einen Ionenaustauschsubstituenten umfasst.

25. Verfahren gemäß Anspruch 21, worin A₁ und B₁ unabhängig voneinander aus der Gruppe gewählt sind, bestehend aus:
PRR', P(OR)(OR') und SR, worin R und R' unabhängig voneinander aus der Gruppe gewählt sind, die aus Niederalkyl, cyclischem Alkyl und Ph besteht, und worin R und R' gleich oder verschieden sein können,
wobei das Verfahren zusätzlich das Oxidieren von wenigstens einem Teil der PRR'-Gruppen, P(OR)(OR')-Gruppen oder SR-Gruppen umfasst.

26. Verfahren gemäß Anspruch 25, worin A₁ und B₁ unabhängig voneinander aus der Gruppe SR gewählt sind, worin R aus der Gruppe, die aus Niederalkyl, cyclischem Alkyl und Ph besteht, gewählt ist, wobei das Verfahren zusätzlich das Umwandeln von wenigstens einem Teil der SR-Gruppen in Sulfonat- oder Sulfonsäuregruppen umfasst.

## Revendications

1. Membrane comprenant un film de base polymère portant des chaînes greffées comprenant des motifs monomères choisis dans le groupe constitué des motifs monomères de formule (I) : 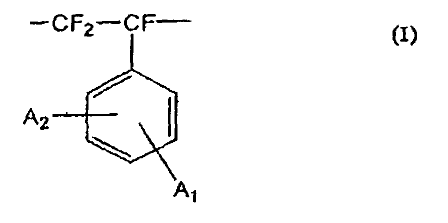 et de formule (II) : 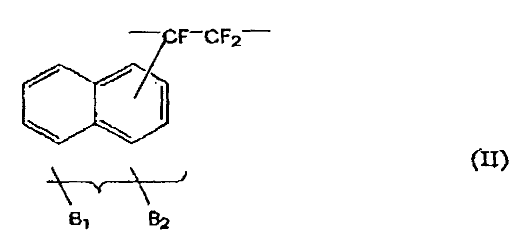 dans lesquelles A₁, A₂ et B₁, B₂ sont choisis indépendamment dans le groupe constitué par :
un atome d'hydrogène, un groupe alkyle inférieur, fluoroalkyle inférieur, alkyle cyclique,
aryle (où le groupe aryle est autre que Ph),
CH(X)Ph, où X est choisi dans le groupe constitué par l'atome de fluor, un groupe alkyle inférieur, fluoroalkyle inférieur et Ph,
PRR' et P(OR)(OR') où R et R' sont choisis indépendamment dans le groupe constitué par un groupe alkyle inférieur, alkyle cyclique et Ph, et où R et R' peuvent être identiques ou différents,
et dans lesquelles A₁, A₂, B₁ et B₂ peuvent être identiques ou différents, à condition que dans chacun des motifs monomères au moins un des substituants A₁, A₂, B₁ et B₂ est autre qu'un atome d'hydrogène.

2. Membrane selon la revendication 1,
dans laquelle A₁ et B₁ sont choisis indépendamment dans le groupe constitué par les groupes alkyle inférieur, fluoroalkyle inférieur et alkyle cyclique.

3. Membrane selon la revendication 1,
dans laquelle A₁ et B₁ sont des groupes aryle identiques ou différents.

4. Membrane selon la revendication 1,
dans laquelle l'un au moins de A₁ et B₁ est un groupe hétéroaromatique contenant au moins un hétéroatome, le au moins un hétéroatome étant choisi dans le groupe constitué par les atomes d'azote, d'oxygène et de soufre.

5. Membrane selon la revendication 4,
dans laquelle l'un au moins des hétéroatomes est un atome d'azote qui est N-alkylé ou N-benzylé.

6. Membrane selon la revendication 1, dans laquelle A₁ et B₁ sont choisis indépendamment dans le groupe constitué par PRR' et P(OR)(OR'), où R et R' sont choisis indépendamment dans le groupe constitué par un groupe alkyle inférieur, alkyle cyclique et Ph, et où R et R' peuvent être identiques ou différents.

7. Membrane selon la revendication 1,
dans laquelle A₁ et B₁ sont choisis indépendamment dans le groupe constitué par Me et CH(X)Ph, où X est choisi dans le groupe constitué par l'atome de fluor, Me et Ph.

8. Membrane selon la revendication 1,
dans laquelle les chaînes greffées comprennent des motifs monomères de formule (I), A₁ est Me et A₂ est Me ou un atome d'hydrogène.

9. Membrane selon la revendication 1,
dans laquelle les chaînes greffées comprennent des motifs monomères de formule (I), A₁ est para-Me et A₂ est un atome d'hydrogène.

10. Membrane selon les revendications 1 à 9,
dans laquelle les chaînes greffées sont homopolymères.

11. Membrane selon les revendications 1 à 9,
dans laquelle les chaînes greffées sont copolymères.

12. Membrane selon les revendications 1 à 11,
dans laquelle au moins une partie des chaînes greffées est réticulée.

13. Membrane selon les revendications 1 à 12,
dans laquelle les chaînes greffées comprennent en outre des motifs monomères de formule (III) : 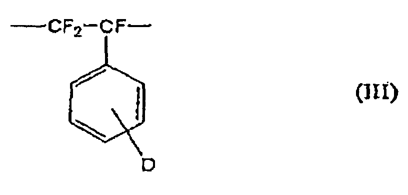 dans laquelle D est choisi dans le groupe constitué par un atome d'hydrogène, de fluor, CF₃, CF₂H, CF=CF₂, SO₂F et SO₃-M+, où M+ est un contre-ion convenable.

14. Membrane selon les revendications 1 à 13,
dans laquelle au moins une partie des motifs monomères comprend en outre au moins un substituant échangeur d'ions.

15. Membrane selon la revendication 14,
dans laquelle les chaînes greffées comprennent au moins deux types différents de groupes échangeurs d'ions.

16. Membrane selon la revendication 14 ou 15,
dans laquelle les chaînes greffées comprennent un groupe échangeur d'anions et un groupe échangeur de cations.

17. Membrane selon les revendication 14 à 16,
dans laquelle la membrane est pratiquement imperméable aux gaz.

18. Appareil à électrodes comprenant la membrane selon l'une quelconque des revendications 14 à 17.

19. Assemblage d'électrodes à membrane comprenant la membrane selon l'une quelconque des revendications 14 à 17.

20. Cellule électrochimique à combustible comprenant la membrane selon l'une quelconque des revendications 14 à 17.

21. Procédé de préparation d'une membrane, le procédé comprenant :
la polymérisation par greffage sur un film de base polymère d'un monomère choisi dans le groupe constitué des monomères de formule (I) : 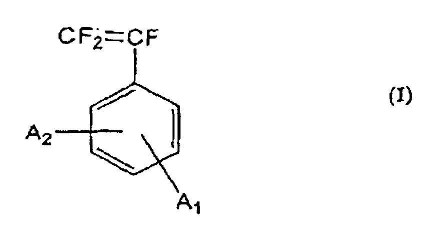 et de formule (II) : 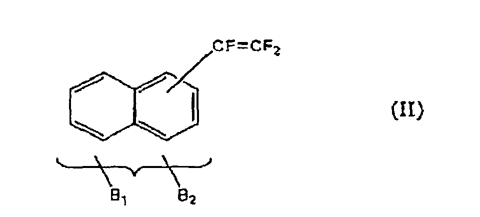
dans lesquelles l'un au moins de A₁, A₂ et l'un au moins de B₁, B₂ sont des substituants autres qu'un atome d'hydrogène qui active le monomère vis à vis de la polymérisation par greffage ;
l'introduction d'un groupe sulfonate dans au moins une partie des motifs monomères polymérisés par greffage ; et
la transformation d'au moins une partie des substituants en un substituant qui désactive la désulfonation.

22. Procédé selon la revendication 21,
dans lequel A₁ et B₁ sont choisis indépendamment dans le groupe constitué par :
un groupe aryle choisi dans le groupe constitué par les groupes hétéroaromatiques monocycliques, hétéroaromatiques polycycliques condensés et les assemblages cycliques hétéroaromatiques comprenant au moins un atome d'azote, et
les phosphines de formule PRR' et les phosphites de formule P(OR)(OR'), dans lesquelles R et R' sont choisis indépendamment dans le groupe constitué par un groupe alkyle inférieur, alkyle cyclique et Ph, et dans lesquelles R et R' peuvent être identiques ou différents,
le procédé comprenant en outre l'alkylation ou la benzylation d'au moins une partie de l'un quelconque des atomes d'azote du groupe aryle, ou des atomes de phosphore de la phosphine ou du phosphite.

23. Procédé selon la revendication 21,
dans lequel A₁ et B₁ sont choisis indépendamment dans le groupe constitué par :
les phosphines de formule PRR' et les phosphites de formule P(OR)(OR'), dans lesquelles R et R' sont choisis indépendamment dans le groupe constitué par un groupe alkyle inférieur, alkyle cyclique et Ph, et dans lesquelles R et R' peuvent être identiques ou différents,
le procédé comprenant en outre les étapes successives consistant à :
introduire un groupe nitro dans au moins une partie des motifs monomères greffés de la membrane ; et
transformer au moins une partie des groupes nitro en groupe ammonium quaternaire.

24. Procédé selon la revendication 23, comprenant en outre la transformation de la phosphine ou du phosphite en un substituant échangeur d'ions.

25. Procédé selon la revendication 21,
dans lequel A₁ et B₁ sont choisis indépendamment dans le groupe constitué par :
PRR', P(OR)(OR') et SR, où R et R' sont choisis indépendamment dans le groupe constitué par un groupe alkyle inférieur, alkyle cyclique et Ph, et dans lesquelles R et R' peuvent être identiques ou différents, le procédé comprenant en outre l'oxydation d'au moins une partie des groupes PRR', P(OR)(OR') ou SR.

26. Procédé selon la revendication 25,
dans lequel A₁ et B₁ sont choisis indépendamment dans le groupe SR, où R est choisi dans le groupe constitué par un groupe alkyle inférieur, alkyle cyclique et Ph, le procédé comprenant en outre la transformation d'au moins une partie des groupes SR en groupes sulfonate ou acide sulfonique.
